# EUROPEAN PATENT APPLICATION

(11) **EP 3 674 460 A1**
(43) Date of publication of application: **01.07.2020**
(21) Application number: 18848512.2
(22) Date of filing: 23.08.2018
(51) Int. Cl.: D04C 1/02

(54) **FOAMED FABRIC STRUCTURE AND MANUFACTURING METHOD THEREFOR**

(30) Priority: 24.08.2017 CN 201710733670
(71) Applicant: Qingyuan Global Technology Services Ltd., Qingyuan City, Guangdong 511800 (CN)
(72) Inventor: LUH, Yih Ping, Taipei City 104 (TW)
(74) Representative: dompatent von Kreisler Selting Werner - Partnerschaft von Patent- und Rechtsanwälten mbB
(86) International application number: PCT/CN2018/101834
(87) International publication number: WO 2019/037746

(57) **Abstract**

The invention provides a foamed fabric structure and a manufacturing method thereof. The foamed fabric structure includes a plurality of interwoven thermoplastic polyester elastomer yarns, wherein the plurality of thermoplastic polyester elastomer yarns are foamed. The manufacturing method of the foamed fabric structure of the invention includes the following steps: providing thermoplastic polyester elastomers; mixing a foaming agent into the thermoplastic polyester elastomers to form a thermoplastic polyester elastomer mixture; drawing yarns from the thermoplastic polyester elastomer mixture to obtain thermoplastic polyester elastomer mixture yarns; weaving the plurality of thermoplastic polyester elastomer mixture yarns to obtain thermoplastic polyester elastomer fabric; and foaming the thermoplastic polyester elastomer fabric to obtain the foamed fabric structure.

## Description

### BACKGROUND

### Technical Field

The invention relates to a foamed fabric structure and a manufacturing method thereof.

### Related Art

In order to make a user comfortable and reduce burdens of the user, soles of footwear are often made of elastic materials/structures. Furthermore, the elastic structures configured to manufacture the soles of the footwear should also have a relatively low weight to reduce the burdens of the user in addition to having excellent elasticity to absorb shock during walking and providing cushioning for both feet to improve comfortableness.

One of common practices is to arrange a foamed material on a bottom layer in a simply flat-laid covering mode. However, besides this mode, the elasticity can still be further improved by other modes.

### SUMMARY

The main objective of the invention is to provide a foamed fabric structure with relatively good elasticity.

The other objective of the invention is to provide a manufacturing method of the foamed fabric structure, and the foamed fabric structure with relatively good elasticity can be manufactured.

The foamed fabric structure of the invention includes a plurality of interwoven thermoplastic polyester elastomer yarns, wherein the plurality of thermoplastic polyester elastomer yarns are foamed.

In one embodiment of the invention, the plurality of thermoplastic polyester elastomer yarns are in contact with one another at woven junctions and are extruded to be sunken inwards.

In one embodiment of the invention, the thermoplastic polyester elastomer yarns are extruded by first yarns to be sunken inwards.

In one embodiment of the invention, a foamed fabric structure includes a plurality of interwoven mixed yarns, wherein the mixed yarns are formed by mixed spinning and twisting of first yarns and thermoplastic polyester elastomer yarns, and the thermoplastic polyester elastomer yarns in the plurality of mixed yarns are foamed.

In one embodiment of the invention, a foamed fabric structure includes a plurality of thermoplastic polyester elastomer yarns and a plurality of first yarns, the plurality of thermoplastic polyester elastomer yarns and the plurality of first yarns being interwoven, wherein the plurality of thermoplastic polyester elastomer yarns are foamed.

The manufacturing method of the foamed fabric structure of the invention includes: step 1010: providing thermoplastic polyester elastomers; step 1020: mixing a foaming agent into the thermoplastic polyester elastomers to form a thermoplastic polyester elastomer mixture; step 1030: drawing yarns from the thermoplastic polyester elastomer mixture to obtain thermoplastic polyester elastomer mixture yarns; step 1040: weaving the plurality of thermoplastic polyester elastomer mixture yarns to obtain thermoplastic polyester elastomer fabric; and step 1050: foaming the thermoplastic polyester elastomer fabric to obtain the foamed fabric structure.

In one embodiment of the invention, a manufacturing method of a foamed fabric structure includes: step 1010: providing thermoplastic polyester elastomers; step 1020: mixing a foaming agent into the thermoplastic polyester elastomers to form a thermoplastic polyester elastomer mixture; step 1030: drawing yarns from the thermoplastic polyester elastomer mixture to obtain thermoplastic polyester elastomer mixture yarns; step 1041: conducting mixed spinning and twisting on the thermoplastic polyester elastomer mixture yarns and first yarns to obtain mixed yarns; step 1042: weaving the plurality of mixed yarns to obtain thermoplastic polyester elastomer fabric; and step 1050: foaming the thermoplastic polyester elastomer fabric to obtain the foamed fabric structure.

In one embodiment of the invention, a manufacturing method of a foamed fabric structure includes: step 1010: providing thermoplastic polyester elastomers; step 1020: mixing a foaming agent into the thermoplastic polyester elastomers to form a thermoplastic polyester elastomer mixture; step 1030: drawing yarns from the thermoplastic polyester elastomer mixture to obtain thermoplastic polyester elastomer mixture yarns; step 1043: providing first yarns; step 1044: weaving the plurality of thermoplastic polyester elastomer mixture yarns and the plurality of first yarns to obtain thermoplastic polyester elastomer fabric; and step 1050: foaming the thermoplastic polyester elastomer fabric to obtain the foamed fabric structure. In one embodiment of the invention, the step 1020 includes: step 1021: heating the thermoplastic polyester elastomers into a molten state; and step 1022: mixing the foaming agent into the thermoplastic polyester elastomers in the molten state.

In one embodiment of the invention, the foaming agent used in the step 1020 is a chemical foaming agent; and the step 1050 includes: heating the thermoplastic polyester elastomer fabric to enable the thermoplastic polyester elastomer fabric to be foamed so as to obtain the foamed fabric structure.

In one embodiment of the invention, before the step 1050, the method further includes: step 1049: putting the thermoplastic polyester elastomer fabric into a mold, wherein the mold is provided with a mold cavity; and the step 1050 includes: foaming the thermoplastic polyester elastomer fabric to obtain the foamed fabric structure complementary to the mold cavity in shape.

Based on the above, the foamed fabric structure of the invention has relatively good elasticity, the manufacturing method of the foamed fabric structure can be configured to manufacture the foamed fabric structure, and a solution to problems described in the prior art is provided.

### BRIEF DESCRIPTION OF THE DRAWINGS

FIG. 1A is a schematic top view of an embodiment of a foamed fabric structure of the invention.
FIG. 1B is a schematic top view of an embodiment of the foamed fabric structure of the invention in foaming.
FIG. 2A is a schematic top view of a different embodiment of the foamed fabric structure of the invention.
FIG. 2B is a schematic diagram of an embodiment of mixed yarns in the invention.
FIG. 3 is a schematic top view of another embodiment of the foamed fabric structure of the invention.
FIG. 4A is a schematic flow diagram of an embodiment of a manufacturing method of the foamed fabric structure of the invention.
FIGS. 4B to 6 are schematic flow diagrams of different embodiments of the manufacturing method of the foamed fabric structure of the invention.

Symbol descriptions of main components are as follows:
100 denotes a thermoplastic polyester elastomer yarn.
101 denotes a thermoplastic polyester elastomer mixture yarn.
200 denotes a mixed yarn.
300 denotes a first yarn.
801 denotes a fabric structure.
810 denotes a foamed fabric structure.
820 denotes a foamed fabric structure.
830 denotes a foamed fabric structure.
1010 denotes a step.
1020 denotes a step.
1021 denotes a step.
1022 denotes a step.
1030 denotes a step.
1040 denotes a step.
1041 denotes a step.
1042 denotes a step.
1043 denotes a step.
1044 denotes a step.
1049 denotes a step.
1050 denotes a step.

### DETAILED DESCRIPTION

In terms of exemplary embodiments, a fabric structure of the invention is used as soles, especially midsoles, of footwear based on elasticity and a relatively low weight. However, in different embodiments, the foamed fabric structure of the invention can be used for other purposes such as a cushion of a backpack, an inner shell of a safety helmet, or a protective device.

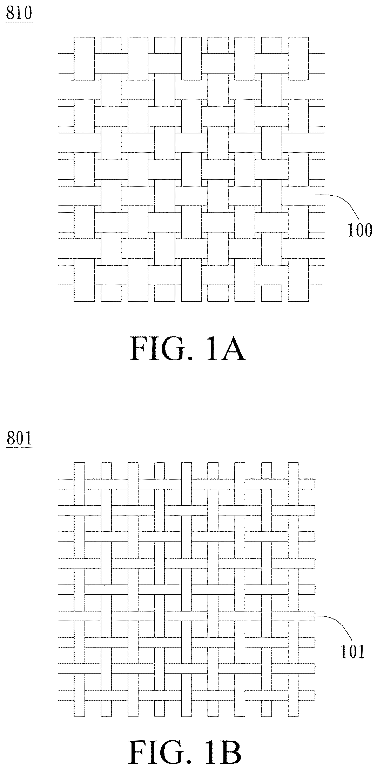

In an embodiment shown in FIG. 1A, a foamed fabric structure 810 of the invention includes a plurality of interwoven thermoplastic polyester elastomer (TPEE) yarns 100. The plurality of thermoplastic polyester elastomer yarns 100 are foamed. The plurality of thermoplastic polyester elastomer yarns 100 may be woven by weaving methods such as tatting and knitting. Furthermore, as shown in FIG. 1B, a plurality of thermoplastic polyester elastomer mixture yarns 101 mixed with a foaming agent but not foamed yet are firstly woven into a fabric structure 801, and then the fabric structure is foamed into the foamed fabric structure 810 shown in FIG. 1A in modes of heating and the like.

The foamed fabric structure is formed by weaving the foamed thermoplastic polyester elastomer yarns, thus having good elasticity. In addition, gaps between the yarns in the foamed fabric structure also provide additional cushioning spaces besides elasticity of the foamed thermoplastic polyester elastomer yarns, so that the overall elasticity of the foamed fabric structure is further improved. On the other hand, since the foamed thermoplastic polyester elastomer yarns have the elasticity and can be extruded by external force to be sunken inwards, the thermoplastic polyester elastomer yarns can be further in contact with one another at woven junctions and extruded to be sunken inwards.

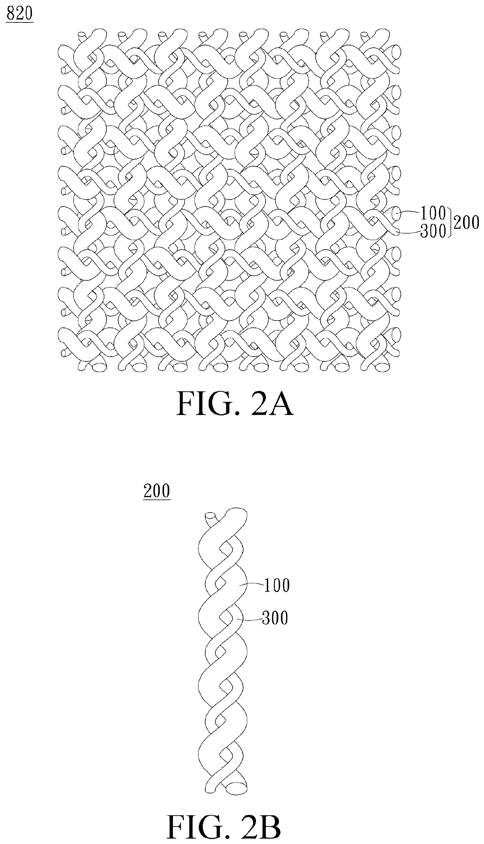

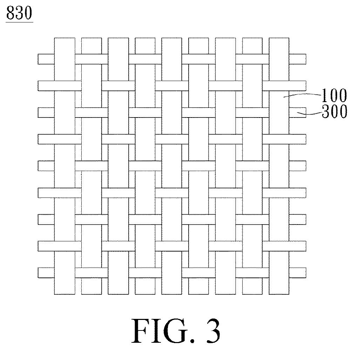

In different embodiments, the foamed fabric structure is not limited to being formed by purely weaving the thermoplastic polyester elastomer yarns and can be formed by weaving the thermoplastic polyester elastomer yarns and other yarns in a mixed mode according to manufacturing or using demands. For example, in an embodiment shown in FIG. 2A, a foamed fabric structure 820 includes a plurality of interwoven mixed yarns 200. As shown in FIG. 2B, the mixed yarns 200 are formed by mixed spinning and twisting of first yarns 300 and thermoplastic polyester elastomer yarns 100, and the thermoplastic polyester elastomer yarns 100 in the plurality of mixed yarns 200 are foamed. In an embodiment shown in FIG. 3, a foamed fabric structure 830 includes a plurality of thermoplastic polyester elastomer yarns 100 and a plurality of first yarns 300, the plurality of thermoplastic polyester elastomer yarns and the plurality of first yarns being interwoven. The plurality of thermoplastic polyester elastomer yarns 100 are foamed. On the other hand, in embodiments shown in FIG. 2A to FIG. 3, the thermoplastic polyester elastomer yarns are extruded by the first yarns to be sunken inwards.

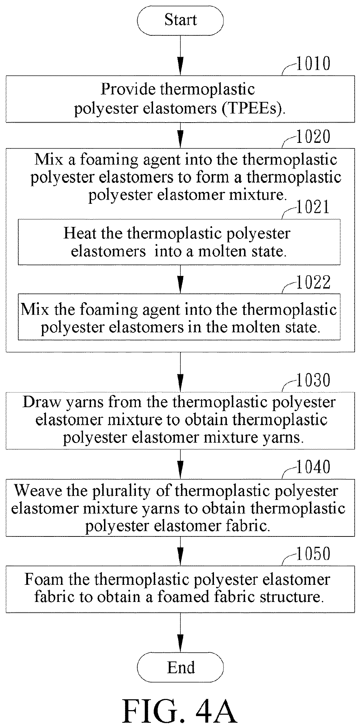

In a flow diagram of an embodiment shown in FIG. 4A, a manufacturing method of a foamed fabric structure of the invention includes, for example, the following steps.

Step 1010, thermoplastic polyester elastomers (TPEEs) are provided. Granular thermoplastic polyester elastomers or molten thermoplastic polyester elastomers may be provided.

Step 1020, a foaming agent is mixed into the thermoplastic polyester elastomers to form a thermoplastic polyester elastomer mixture. In terms of exemplary embodiments, the step 1020 includes: step 1021, the thermoplastic polyester elastomers are heated into a molten state; and step 1022, the foaming agent is mixed into the thermoplastic polyester elastomers in the molten state.

Step 1030, yarns are drawn from the thermoplastic polyester elastomer mixture to obtain thermoplastic polyester elastomer mixture yarns. The thermoplastic polyester elastomer mixture yarns can be operated in various weaving devices including a circular knitting machine, a flat knitting machine and a tatting device, and meet yarn diameter standards of various device weaving conditions.

Step 1040, the plurality of thermoplastic polyester elastomer mixture yarns are woven to obtain thermoplastic polyester elastomer fabric. More specifically, the plurality of thermoplastic polyester elastomer mixture yarns are woven to obtain the fabric structure 801 shown in FIG. 1B.

Step 1050, the thermoplastic polyester elastomer fabric is foamed to obtain the foamed fabric structure. More specifically, the fabric structure 801 shown in FIG. 1B is foamed to obtain the foamed fabric structure 810 shown in FIG. 1A.

Based on the above, in the manufacturing method of the foamed fabric structure of the invention, the yarns with the thermoplastic polyester elastomers are woven firstly and then foamed, so that relatively good weaving operability is achieved. Viewed from different perspectives, the foamed yarns with the thermoplastic polyester elastomers have a relatively large yarn diameter and relatively low density, and are inconvenient to weave, so that the manufacturing method of the foamed fabric structure of the invention adopts the mode of firstly weaving and then foaming, and the operability of a process is improved accordingly.

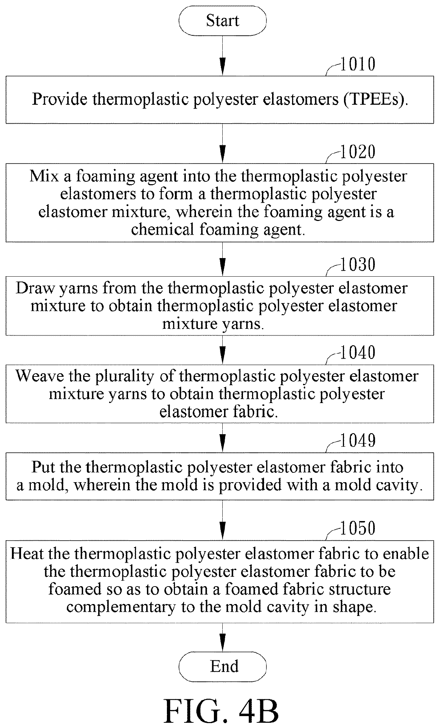

As shown in FIG. 4B, in exemplary embodiments, the foaming agent used in the foregoing step 1020 is a chemical foaming agent. Correspondingly, the step 1050 includes: heating the thermoplastic polyester elastomer fabric to enable the thermoplastic polyester elastomer fabric to be foamed so as to obtain the foamed fabric structure.

On the other hand, before the step 1050, the method further includes: step 1049: the thermoplastic polyester elastomer fabric is put into a mold, and the mold is provided with a mold cavity; and step 1050: the thermoplastic polyester elastomer fabric is foamed to obtain the foamed fabric structure complementary to the mold cavity in shape. More specifically, the thermoplastic polyester elastomers have thermoplasticity, so that the thermoplastic polyester elastomer fabric also has thermoplasticity, and thus, the thermoplastic polyester elastomer fabric can be shaped into the foamed fabric structure complementary to the mold cavity of the mold in shape while being placed in the mold to be heated and foamed.

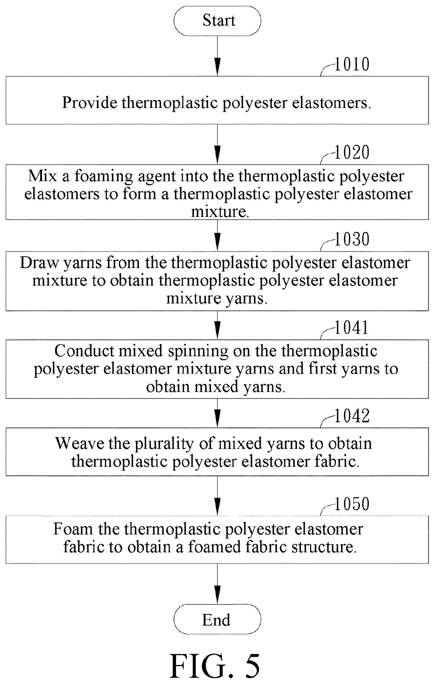

In a flow diagram of another embodiment of the invention shown in FIG. 5, a manufacturing method of a foamed fabric structure of the invention includes, for example, the following steps.

Step 1010, thermoplastic polyester elastomers are provided.

Step 1020, a foaming agent is mixed into the thermoplastic polyester elastomers to form a thermoplastic polyester elastomer mixture.

Step 1030, yarns are drawn from the thermoplastic polyester elastomer mixture to obtain thermoplastic polyester elastomer mixture yarns.

Step 1041, mixed spinning and twisting are conducted on the thermoplastic polyester elastomer mixture yarns and first yarns to obtain mixed yarns.

Step 1042, the plurality of mixed yarns are woven to obtain thermoplastic polyester elastomer fabric.

Step 1050, the thermoplastic polyester elastomer fabric is foamed to obtain the foamed fabric structure. More specifically, the thermoplastic polyester elastomer fabric is foamed to obtain the foamed fabric structure 820 shown in FIG. 2A.

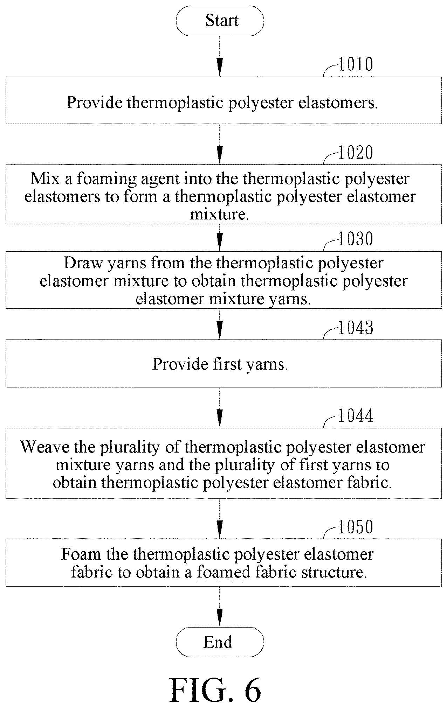

In a flow diagram of another embodiment of the invention shown in FIG. 6, a manufacturing method of a foamed fabric structure of the invention includes, for example, the following steps.

Step 1010, thermoplastic polyester elastomers are provided.

Step 1020, a foaming agent is mixed into the thermoplastic polyester elastomers to form a thermoplastic polyester elastomer mixture.

Step 1030, yarns are drawn from the thermoplastic polyester elastomer mixture to obtain thermoplastic polyester elastomer mixture yarns.

Step 1043, first yarns are provided.

Step 1044, the plurality of thermoplastic polyester elastomer mixture yarns and the plurality of first yarns are woven to obtain thermoplastic polyester elastomer fabric.

Step 1050, the thermoplastic polyester elastomer fabric is foamed to obtain the foamed fabric structure. More specifically, the thermoplastic polyester elastomer fabric is foamed to obtain a foamed fabric structure 830 shown in FIG. 3.

Based on the above, the foamed fabric structure of the invention has relatively good elasticity, the manufacturing method of the foamed fabric structure can be configured to manufacture the foamed fabric structure, and a solution to problems described in the prior art is provided.

Although the foregoing description and accompanying drawings have disclosed preferred embodiments of the invention, it needs to be understood that various additions, many modifications and substitutions may be used in the preferred embodiments of the invention without departing from the spirit and scope of the principles of the invention as defined by the appended claims. A person skilled in the art to which the present invention belongs will understand that the invention can be used for modification of many forms, structures, arrangements, proportions, materials, elements and components. Therefore, the embodiments disclosed herein should be considered to illustrate the invention and not to limit the invention. The scope of the invention should be defined by the appended claims, and encompasses their legal equivalents, and is not limited to the foregoing description

### Industrial application

The foamed fabric structure of the invention has relatively good elasticity, and the manufacturing method of the foamed fabric structure can be configured to manufacture the foamed fabric structure. The fabric structure of the invention is used as soles, especially midsoles, of footwear based on the elasticity and a relatively low weight. However, in actual application, the foamed fabric structure of the invention can be further used for other purposes such as a cushion of a backpack, an inner shell of a safety helmet, or a protective device.

## Claims

1. A foamed fabric structure, comprising a plurality of interwoven thermoplastic polyester elastomer yarns, wherein the plurality of thermoplastic polyester elastomer yarns are foamed.

2. The foamed fabric structure according to claim 1, wherein the plurality of thermoplastic polyester elastomer yarns are in contact with one another at woven junctions and are extruded to be sunken inwards.

3. A foamed fabric structure, comprising a plurality of interwoven mixed yarns, wherein the mixed yarns are formed by mixed spinning and twisting of first yarns and thermoplastic polyester elastomer yarns, and the thermoplastic polyester elastomer yarns in the plurality of mixed yarns are foamed.

4. A foamed fabric structure, comprising a plurality of thermoplastic polyester elastomer yarns and a plurality of first yarns, the plurality of thermoplastic polyester elastomer yarns and the plurality of first yarns being interwoven, wherein the plurality of thermoplastic polyester elastomer yarns are foamed.

5. The foamed fabric structure according to claim 3 or 4, wherein the thermoplastic polyester elastomer yarns are extruded by the first yarns to be sunken inwards.

6. A manufacturing method of a foamed fabric structure, comprising:
step 1010: providing thermoplastic polyester elastomers;
step 1020: mixing a foaming agent into the thermoplastic polyester elastomers to form a thermoplastic polyester elastomer mixture;
step 1030: drawing yarns from the thermoplastic polyester elastomer mixture to obtain thermoplastic polyester elastomer mixture yarns;
step 1040: weaving the plurality of thermoplastic polyester elastomer mixture yarns to obtain thermoplastic polyester elastomer fabric; and
step 1050: foaming the thermoplastic polyester elastomer fabric to obtain the foamed fabric structure.

7. A manufacturing method of a foamed fabric structure, comprising:
step 1010: providing thermoplastic polyester elastomers;
step 1020: mixing a foaming agent into the thermoplastic polyester elastomers to form a thermoplastic polyester elastomer mixture;
step 1030: drawing yarns from the thermoplastic polyester elastomer mixture to obtain thermoplastic polyester elastomer mixture yarns;
step 1041: conducting mixed spinning and twisting on the thermoplastic polyester elastomer mixture yarns and first yarns to obtain mixed yarns;
step 1042: weaving the plurality of mixed yarns to obtain thermoplastic polyester elastomer fabric; and
step 1050: foaming the thermoplastic polyester elastomer fabric to obtain the foamed fabric structure.

8. A manufacturing method of a foamed fabric structure, comprising:
step 1010: providing thermoplastic polyester elastomers;
step 1020: mixing a foaming agent into the thermoplastic polyester elastomers to form a thermoplastic polyester elastomer mixture;
step 1030: drawing yarns from the thermoplastic polyester elastomer mixture to obtain thermoplastic polyester elastomer mixture yarns;
step 1043: providing first yarns;
step 1044: weaving the plurality of thermoplastic polyester elastomer mixture yarns and the plurality of first yarns to obtain thermoplastic polyester elastomer fabric; and
step 1050: foaming the thermoplastic polyester elastomer fabric to obtain the foamed fabric structure.

9. The manufacturing method of a fabric structure according to any one of claims 6 to 8, wherein the step 1020 comprises:
step 1021: heating the thermoplastic polyester elastomers into a molten state; and
step 1022: mixing the foaming agent into the thermoplastic polyester elastomers in the molten state.

10. The manufacturing method of a fabric structure according to any one of claims 6 to 8, wherein
the foaming agent used in the step 1020 is a chemical foaming agent; and
the step 1050 comprises: heating the thermoplastic polyester elastomer fabric to enable the thermoplastic polyester elastomer fabric to be foamed so as to obtain the foamed fabric structure.

11. The manufacturing method of a fabric structure according to any one of claims 6 to 8, wherein
before the step 1050, the method further comprises:
step 1049: putting the thermoplastic polyester elastomer fabric into a mold, wherein the mold is provided with a mold cavity; and
the step 1050 comprises: foaming the thermoplastic polyester elastomer fabric to obtain the foamed fabric structure complementary to the mold cavity in shape.
